Europäisches Patentamt

European Patent Office

Office européen des brevets

(11) Veröffentlichungsnummer: **0 271 643 B1**

# EUROPÄISCHE PATENTSCHRIFT

(45) Veröffentlichungstag der Patentschrift: **04.12.91**

(51) Int. Cl.⁵: **B29C 43/44**, B29C 43/46

(21) Anmeldenummer: **87113087.8**

(22) Anmeldetag: **08.09.87**

(54) **Einrichtung zum Auswechseln von Walzen einer Abzugswalzenstrecke an Kalandern für die Herstellung von thermoplastischen Kunststoffolien.**

(30) Priorität: **19.12.86 DE 3643455**

(43) Veröffentlichungstag der Anmeldung:
**22.06.88 Patentblatt 88/25**

(45) Bekanntmachung des Hinweises auf die
Patenterteilung:
**04.12.91 Patentblatt 91/49**

(84) Benannte Vertragsstaaten:
**DE FR GB IT**

(56) Entgegenhaltungen:
**JP-A-57 137 008**
**US-A- 4 408 974**

**KUNSTSTOFFE, Band 74, Nr. 11, November
1984, Seiten 662-666, München, DE; W. WÖK-
KENER: "Technische Entwicklungen bei
Kunststoff-Kalandern"**

(73) Patentinhaber: **HERMANN BERSTORFF Maschinenbau GmbH**
**An der Breiten Wiese 3/5**
**W-3000 Hannover 61(DE)**

(72) Erfinder: **Heise, Wolfgang**
**Peter-Köster-Strasse 13**
**W-3000 Hannover 51(DE)**

## Beschreibung

Die Erfindung betrifft eine Einrichtung zum Auswechseln von Abzugswalzen gemäß dem Oberbegriff von Anspruch 1.

Thermoplastische Kunststoffolien, z.B. PVC-Folien, werden beispielsweise auf sogenannten "F-Kalandern" hergestellt. Unter F-Kalandern werden Kalander verstanden, mit drei senkrecht übereinander in einem Ständer angeordneten Walzen sowie einer in Höhe der obersten Walze jeweils waagerecht davor oder dahinter angeordneten weiteren Walze.

Das zu einer PVC-Folie zu verarbeitende, strangförmige Material wird in den Spalt zwischen den beiden oberen, nebeneinander angeordneten Walzen aufgegeben und durchläuft dann die weiteren Walzenspalte nach unten, wobei die einzelnen Kalanderwalzen von der gebildeten Folie teilweise umschlungen werden.

Von der untersten Walze des F-Kalanders wird die Folie von einer, aus mehreren Abzugswalzen bestehenden Abzugswalzenstrecke aufgenommen. In der Abzugswalzenstrecke wird die Folie in einem Verhältnis von etwa 1 zu 2 auseinander gezogen.

Die Abzugswalzen werden einzeln angetrieben und durch ein umlaufendes Medium (Wasser oder Öl) beheizt. Die Walzen weisen etwa einen Durchmesser von 150 - 200 mm und eine Länge von 2.200 - 2.600 mm (je nach Arbeitsbreite der Kalanderwalzen) auf. Derartige Abzugswalzen können aufgrund ihres Gewichtes und ihrer Abmessungen nur noch mit einem Hebezeug ausgewechselt werden, wenn z.B. Walzen mit einer anderen Oberfläche (Rauhtiefe) eingesetzt werden sollen, oder wenn Undichtigkeiten an den Köpfen des Temperiermedium-Umlaufsystems oder Lagerschäden auftreten.

Ein Auswechselvorgang einzelner Abzugswalzen gestaltet sich sehr schwierig und äußerst zeitaufwendig, weil insbesondere bei einem F-Kalander nicht mit einem Hebezeug gearbeitet werden kann, da die obere Walze einschl. des Lagers und der Verstelleinrichtung über der Abzugswalzenstrecke angeordnet ist, wodurch ein Anheben und Ausbauen nach oben nicht mehr möglich ist.

Ein Auswechselvorgang einer Abzugswalze wurde bisher (Fachzeitschrift "Kunststoffe" 74 (1984)11, Seiten 662-669) durchgeführt durch beidseitiges Anheben der Walzen an den Zapfen mittels Hubwagen oder dgl., Lösen der Antriebskuppelstange an der einen Seite des Walzenzapfens sowie Lösen der Schnellkupplung für das umlaufende Temperiermedium auf der anderen Seite. Danach mußte eine Führungs- und Halteschiene großer Länge unter die Abzugswalze geschoben werden, auf der dann die Walze seitlich aus den Kalanderständern herausgezogen wurde. Ein derartiger Auswechselvorgang bedeutete einen langen Stillstand der gesamten Kalanderlinie und führte darüber hinaus zu einer Beschädigung des sehr empfindlichen Walzenmantels der Abzugswalze.

Aus der US-PS 3,581,340 ist ein L-Kalander mit einer in Arbeitsrichtung an der letzten Kalanderwalze angeordneten Abzugswalzenstrecke bekannt, bei der die nachgeordnete Abzugswalzenstrecke und die Prägeeinrichtung auf einem verfahrbaren Wagen angeordnet sind. Eine Auswechslungsmöglichkeit einzelner Abzugswalzen aus dem Kalanderständer wird in dieser Schrift nicht offenbart, so daß davon auszugehen ist, daß auch bei dieser Anordnung ein Auswechselvorgang, wie oben geschildert, durchgeführt werden muß.

Aus der DE-PS 35 06 256 ist ein F-Kalander bekannt, mit einer in Arbeitsrichtung der letzten Walze nachgeordneten Abzugswalzenstrecke, der wiederum eine verfahrbare und verschwenkbare Prägeeinrichtung in Arbeitsrichtung nachgeordnet ist. Eine Auswechselmöglichkeit einzelner Abzugswalzen aus der Abzugswalzenstrecke ist aus dieser Schrift ebenfalls nicht bekannt.

Es ist die Aufgabe der Erfindung, eine Einrichtung zum Auswechseln einzelner Abzugswalzen einer Abzugswalzenstrecke an einem Kunststoffkalander zu schaffen, mittels welcher ohne Hubwagen und weiteren teuren Zusatzeinrichtungen in wenigen Minuten und ohne jegliche Beschädigung Abzugswalzen ausgewechselt werden können.

Die Aufgabe wird durch die Merkmale des ersten Patentanspruchs gelöst.

Vorteilhafte Weiterbildungen der Erfindung werden in den Unteransprüchen beschrieben.

Durch die Anordnung von Halteeinrichtungen an bzw. auf den Ständern der verfahrbaren Prägeeinrichtung, die unter die jeweils auszubauende Abzugswalze gefahren werden, wird die Abzugswalze aufgenommen.

Die bewegliche Ausbildung der Halteeinrichtung ermöglicht, daß die beiden gabelförmig ausgebildeten Aufnahmen bis an den Abzugswalzenmantel herangefahren werden können, so daß eine sichere Führung der auszuwechselnden Walze gewährleistet ist.

Da in vielen Fällen die Prägeeinrichtung nicht bis unter die erste Abzugswalze der Walzenstrecke gefahren werden kann, sind die dem Kalander zugewandten beiden Aufnahmen der Halteeinrichtung mittels Hydraulik- oder Pneumatikzylinder bis unterhalb der ersten Abzugswalze waagerecht verfahrbar ausgebildet. In dieser Position werden dann die beiden Aufnahmeeinrichtungen hydraulisch oder pneumatisch hochgefahren bis an den Mantel der Abzugswalze.

Um jegliche Beschädigung der sehr empfindlichen Mäntel der Abzugswalzen zu vermeiden, sind die beiden etwa gabelförmig ausgebildeten Aufnahmen der Halteeinrichtung entweder mit Teflon überzogen oder bestehen aus etwa gabelförmig ausgebildeten Teflonblöcken (PTFE-Blöcken).

Durch die Anordnung von Halteeinrichtungen an den Ständern der Prägeeinrichtung, und zwar einmal an der dem Kalander zugewandten Seite und an dem gegenüberliegenden Ende der auf Schienen verfahrbaren Ständer, wird erreicht, daß die Prägeeinrichtung selbst nur um einen kurzen Weg verfahren werden muß, um beiden Aufnahmen einer Halteeinrichtung unter einer auszuwechselnden Abzugswalze zu plazieren, wobei zusätzlich noch die kalanderseitigen Aufnahmeeinrichtungen waagerecht verfahrbar sein können für die erste Abzugswalze.

Nachdem die auszuwechselnde Abzugswalze auf den Aufnahmeeinrichtungen liegt, wird die Walze auf der einen Seite von ihrem Antrieb abgekoppelt durch Lösen einer Kupplungsstange. Auf der anderen Seite wird ein Schnellverschluß für den Zu- und Ablauf des Temperiermediums gelöst.

Gemäß einer bevorzugten Ausführungsform der Erfindung sind die beiden Aufnahmen der Halteeinrichtung mittels eines pneumatisch oder hydraulisch betriebenen Parallelkurbeltriebes einseitig und schräg nach unten, unter Wahrung ihrer waagerechten Lage, verschwenkbar ausgebildet.

Durch diese vorteilhafte Ausbildung wird erreicht, daß die von ihren beidseitigen Anschlüssen gelöste Abzugswalze in ihrer nach unten verschwenkten waagerechten Position ungehindert an den hintereinander angeordneten Temperiermediumanschlüssen der nicht ausgewechselten Walzen vorbeigefahren werden kann. Die sich auf den Aufnahmeeinrichtungen befindliche Walze wird durch Verfahren der Prägeeinrichtung soweit von dem Kalander weggefahren, bis ein Hebezeug die Walze von oben erfassen und durch eine andere Walze auswechseln kann.

Ein bevorzugtes Ausführungsbeispiel der Erfindung wird anhand der Zeichnungen erläutert.

Es zeigen:

Fig. 1    einen schematisierten Längsschnitt durch einen 4-Walzen-F-Kalander, einer Abzugswalzenstrekke und einer Prägeeinrichtung.

Fig. 2    eine schematische Darstellung eines Parallelkurbeltriebes an den beiden Aufnahmeeinrichtungen zum seitlichen Herunterschwenken einer Abzugswalze.

An einem 4-Walze-F-Kalander 1 ist eine Abzugswalzenstrecke 2 angeordnet. In Arbeitsrichtung hinter der Abzugswalzenstrecke 2 ist die Prägeeinrichtung 3 vorgesehen.

Der Kalander 1 weist drei übereinander angeordnete Walzen 4, 5 und 6 auf sowie eine der Walze 6 waagerecht vorgelagerte Walze 7.

Mittels des Verstellgetriebes 8 wird die Walze 4, des Getriebes 9 die Walze 7 und des Getriebes 10 die Walze 6 verstellt, um unterschiedlich dicke Kunststoffolien herstellen zu können.

Die Abzugswalzenstrecke 2 weist in diesem Beispiel zwölf einzelne Abzugswalzen 11 auf, wobei jede zweite Walze durch eine nicht dargestellte Einrichtung hochgefahren werden kann, wie durch die über diese Walzen gestrichelt gezeichneten Abzugswalzen angedeutet wurde, um die zu verstreckende Kunststofffolie besser einfädeln zu können. Die ersten Abzugswalze wurde mit 11a und die letzte Walze mit 11b gekennzeichnet.

Die Prägeeinrichtung 3 weist drei Walzen 12, 13 und 14 auf, die jeweils mit ihren Lagern in den beidseitigen Ständern 15 gelagert sind. Die Walze 14 ist mittels des Hydraulikzylinders 16 quer zum Kalander verfahrbar.

Am Ständer 15 ist die Halteeinrichtung 17 an der Kalanderseite und die Halteeinrichtung 16 an der gegenüberliegenden Seite angeordnet.

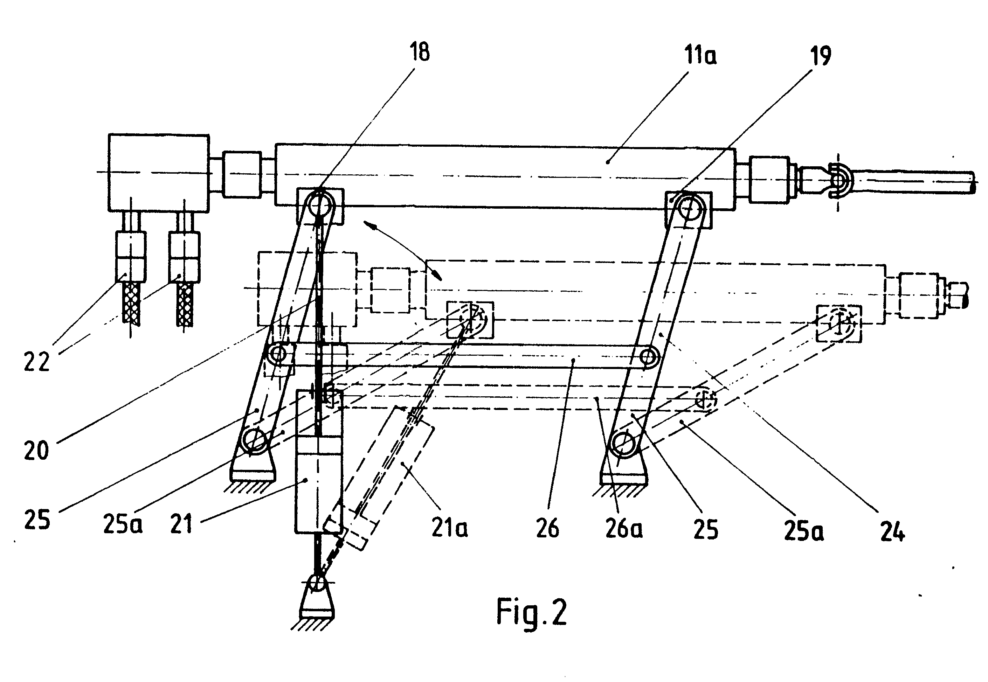

Bei dem in Fig. 2 gezeigten Ausführungsbeispiel besteht die Halteeinrichtung aus zwei gabelförmigen Aufnahmen 18 und 19, die mit der Kolbenstange 20 eines Hydraulikzylinders 21 angehoben werden. Der Übersicht halber wurde in Fig. 2 der rechte Hydraulikzylinder für den Anhebevorgang weggelassen.

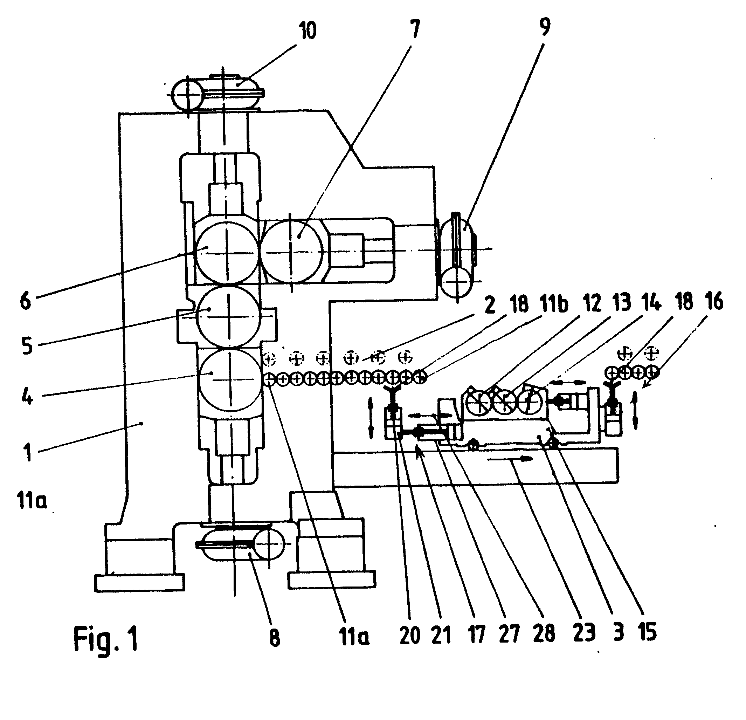

Wenn die Kolbenstange 20 in den Hydraulikzylinder 21 also heruntergefahren wird, verschwenkt die vorher von ihren Temperiermediumanschlüssen mittels der Schnellverschlußkupplung 22 und von ihrer Antriebskupplungsstange gelöste Abzugswalze 11a in die durch gestrichelte Linien dargestellte Position, so daß die Abzugswalze 11a dann durch Verfahren der Prägeeinrichtung 3 in Richtung des Pfeiles 23 in Fig. 1 ungehindert an den hinter den Schnellverschlußkupplungen 22 angeordneten übrigen, nicht gezeigten Kupplungen vorbeifahren und mittels eines Hebezeuges angehoben und ausgewechselt werden kann.

Die durch die gestrichelten Linien dargestellte Position der Walze 11a wird erreicht durch einen Parallelkurbeltrieb 24, der aus zwei seitlichen Armen 25 und einer waagerechten Verbindungsstangen 26 gebildet wird.

Um bei dem gezeigten Ausführungsbeispiel die erste Walze 11a durch die Aufnahmeeinrichtung erfassen und auswechseln zu können, werden die beidseitig an Ständern 15 befestigten Hydraulikzylinder 21 mittels zwei weiterer waagerecht wirkender Hydraulikzylinder 27 in Richtung des Pfeiles 28 unter die erste Abzugswalze 11a gefahren. Erst danach werden mittels Hydraulikzylinder 21 die beiden gabelförmigen Aufnahmen 18 und 19 bis an den Mantel der Abzugswalze 11a herangefahren, um den Auswechselvorgang, wie oben geschildert, ausführen zu können, wobei wiederum vorher durch den Parallelkurbeltrieb 24 ein seitliches Verschwenken der Walze 11a schräg nach unten durchgeführt wird.

**Bezugszeichenliste:**

| | | |
|---|---|---|
| 1 | = | Kalander |
| 2 | = | Abzugswalzenstrecke |
| 3 | = | Prägeeinrichtung |
| 4 | = | Walze |
| 5 | = | Walze |
| 6 | = | Walze |
| 7 | = | waagerechte Walze |
| 8 | = | Verstellgetriebe |
| 9 | = | Verstellgetriebe |
| 10 | = | Verstellgetriebe |
| 11 | = | Abzugswalzen |
| 11a | = | erste Abzugswalze |
| 11b | = | letzte Abzugswalze |
| 12 | = | Prägewalze |
| 13 | = | Prägewalze |
| 14 | = | Prägewalze |
| 15 | = | Ständer |
| 16 | = | Halteeinrichtung |
| 17 | = | Halteeinrichtung |
| 18 | = | gabelförmige Aufnahme |
| 19 | = | gabelförmige Aufnahme |
| 20 | = | Kolbenstange |
| 21 | = | Hydraulikzylinder |
| 22 | = | Schnellverschlußkupplung |
| 23 | = | Pfeilrichtung |
| 24 | = | Parallkurbeltrieb |
| 25 | = | seitliche Arme |
| 26 | = | waagerechte Verbindungsstangen |
| 27 | = | Hydraulikzylinder |

**Patentansprüche**

1. Einrichtung zum Auswechseln von Walzen einer Abzugswalzenstrecke an Kalandern für die Herstellung von thermoplastischen Kunststoffolien, z.B. PVC-Folien, mit einer in Arbeitsrichtung des Kalanders der Abzugswalzenstrecke nachgeordneten, auf Schienen verfahrbaren Prägeeinrichtung, die in seitlichen Ständern mehrere Prägewalzen aufnimmt,

   **dadurch gekennzeichnet,**

   daß die Halteeinrichtungen (16, 17) für die Aufnahme einzelner Abzugswalzen (11) an der Prägeeinrichtung (3) angeordnet und gemeinsam mit dieser bis unterhalb der Abzugswalzenstrecke (2) verfahrbar ausgebildet sind.

2. Einrichtung nach Anspruch 1,

   **dadurch gekennzeichnet,**

   daß die Ständer (15) der Prägeeinrichtung (3) an ihren dem Kalander (1) zugewandten und abgewandten Enden Halteeinrichtungen (16, 17) für die Aufnahme der Abzugswalzen (11, 11a, 11b) aufweisen.

3. Einrichtung nach Anspruch 1,

   **dadurch gekennzeichnet,**

   daß die Halteinrichtungen (16, 17) als gabelförmige, mit einer Teflonschicht überzogene Haltearme (18, 19) oder aus etwa gabelförmig ausgebildete Teflonblöcke (PTFE-Blöcke) ausgebildet sind.

4. Einrichtung nach Anspruch 1 bis 3,

   **dadurch gekennzeichnet,**

   daß die dem Kalander (1) zugewandte Halteeinrichtung (17) mittels Hydraulik- oder Pneumatikzylinder (27) waagerecht in Richtung des Kalanders (1) und senkrecht mittels Hydraulik- oder Pneumatikzylinder (21) nach oben bzw. unten verfahrbar ausgebildet sind.

5. Einrichtung nach Anspruch 1 bis 4,

   **dadurch gekennzeichnet,**

   daß die beidseitig auf den Prägeeinrichtungsständern (15) angeordneten Halteeinrichtungen (16. 17) zusammen mit einer Abzugswalze (11) mittels eines pneumatisch oder hydraulisch betriebenen Parallelkurbeltriebes (24) einseitig und schräg nach unten verfahrbar ausgebildet sind.

**Claims**

1. Apparatus for replacing rollers in a take-up roller train on calenders for producing thermoplastic plastics material films, e.g. PVC films, comprising an embossing means, which is disposed after the take-up roller train when viewed in the operating direction of the calender and is displaceable on rails, the embossing means accommodating a plurality of embossing rollers in lateral support columns, characterised in that the carrier means (16, 17) for the accommodation of individual take-up rollers (11) are disposed on the embossing means (3), and, jointly therewith, are adapted to be displaceable to beneath the take-up roller train (2).

2. Apparatus according to claim 1, characterised in that the support columns (15) of the embossing means (3) include carrier means (16, 17) at their ends facing towards and away from the calender (1) for the accommodation of the take-up rollers (11, 11a, 11b).

3. Apparatus according to claim 1, characterised in that the carrier means (16, 17) comprise bifurcated support holders (18, 19), which are coated with a layer of Teflon, or they comprise substantially bifurcated Teflon blocks (PTFE blocks).

4. Apparatus according to claims 1 to 3, characterised in that the carrier means (17), which faces the calender (1), is adapted to be horizontally displaceable in a direction towards and away from the calender (1) by means of hydraulically or pneumatically actuated piston and cylinder arrangements (27) and vertically upwardly or downwardly displaceable by means of hydraulically or pneumatically actuated piston and cylinder arrangements (21).

5. Apparatus according to claims 1 to 4, characterised in that the carrier means (16, 17), which are disposed on either side of the support columns (15) for the embossing means, together with a take-up roller (11), are adapted to be unilaterally and inclinedly downwardly displaceable by means of a pneumatically or hydraulically actuated parallel linkage arrangement (24).

**Revendications.**

1. Dispositif de changement de cylindres d'un train de cylindres détacheurs sur des calandres pour produire des films de matière thermoplastique, p. ex. des films de PVC, avec un dispositif de gaufrage mobile sur des rails placé en aval du train de cylindres détacheurs dans le sens de fonctionnement de la calandre, qui comprend plusieurs cylindres de gaufrage entre des bâtis latéraux, caractérisé en ce que les dispositifs de maintien (16, 17) recevant chaque cylindre détacheur (11) sont disposés sur le dispositif de gaufrage (3), et sont agencés de manière mobile de façon à pouvoir se déplacer ensemble jusque sous le train (2) de cylindres détacheurs.

2. Dispositif selon la revendication 1, caractérisé en ce que les bâtis (15) du dispositif de gaufrage (3) présentent sur leurs extrémités dirigées vers la calandre (1), et à l'opposé de celle-ci, des dispositifs de maintien (16, 17) destinés à recevoir les cylindres détacheurs (11, 11a, 11b).

3. Dispositif selon la revendication 1, caractérisé en ce que les dispositifs de maintien (16, 17) sont réalisés en forme de fourche, avec des bras de maintien (18, 19) revêtus d'une couche de Teflon (18, 19) ou en blocs de Teflon ayant la forme de fourche (blocs de PTFE).

4. Dispositif selon l'une des revendications 1 à 3, caractérisé en ce que le dispositif de maintien (17) dirigé vers la calandre (1) peut se déplacer horizontalement vers la calandre (1) au moyen de vérins (27) hydrauliques ou pneumatiques, et perpendiculairement au moyen de vérins (21) hydrauliques ou pneumatiques.

5. Dispositif selon l'une des revendications 1 à 4, caractérisé en ce qu'on réalise les dispositifs de maintien (16, 17) disposés de chaque côté sur les bâtis du dispositif de gaufrage (15) avec un cylindre détacheur (11) de manière mobile d'un côté et vers le bas obliquement, grâce à une transmission pantographe (24) actionnée pneumatiquement ou hydrauliquement.

Fig. 1

Fig.2

EP 0 271 643 B1